# EUROPÄISCHE PATENTSCHRIFT

(11) **EP 2 492 655 B1**
(45) Veröffentlichungstag und Bekanntmachung des Hinweises auf die Patenterteilung: **23.10.2019**
(21) Anmeldenummer: 12000511.1
(22) Anmeldetag: 26.01.2012
(51) Int. Cl.: G01J 5/04, G01J 5/08, G02B 6/14, G01J 5/00

(54) **Messgerät zur Messung von Parametern in Schmelzen**
Measuring device for measuring parameters in molten masses
Appareil de mesure de paramètres pour des masses en fusion

(30) Priorität: 23.02.2011 DE 102011012174
(43) Veröffentlichungstag der Anmeldung: 29.08.2012
(73) Patentinhaber: Heraeus Electro-Nite International N.V., 3530 Houthalen (BE)
(72) Erfinder: Cuypers, Jan, 3500 Kermt (BE); Straetemans, Marc, 3941 Eksel (BE); Indeherberge, Valère, 3520 Zonhoven (BE); Houbregs, Maurice, 3600 Genk (BE)
(74) Vertreter: Heraeus IP

(56) Entgegenhaltungen:
- EP-A1- 0 802 401
- EP-A1- 1 617 194
- WO-A1-01/69313
- WO-A1-2005/005945

## Beschreibung

Die Erfindung betrifft ein Messgerät zur Messung von Parametern in Schmelzen, insbesondere zur Messung der Temperatur, insbesondere in Metall- oder Kryolithschmelzen mit einem Schmelzpunkt oberhalb 500 °C, mit einer Lichtleitfaser zur Aufnahme von Strahlung aus der Schmelze und mit einer Kabeltrommel, die einen äußeren Umfang zur Aufnahme der Lichtleitfaser und einen von dem äußeren Umfang umgebenden Innenraum aufweist. Die Erfindung ist weiterhin gerichtet auf eine Kabeltrommel, die zur Verwendung in dem erfindungsgemäßen Messgerät geeignet ist.

Ähnliche Messgeräte sind beispielsweise aus US 6,227,702 B1 und aus DE 103 31 125 B3 bekannt. Hier wird eine Lichtleitfaser zur Messung in Schmelzen verwendet, wobei die Lichtleitfaser mit einem Messgerät einerseits und einer Tauchlanze zum Eintauchen in die Schmelze andererseits verbunden ist. Die Lichtleitfaser wird über einen Zuführmechanismus der Tauchlanze zugeführt und entsprechend dem Verbrauch nachgeführt, wobei sie von einer Art Kabeltrommel abgewickelt wird. Aus den beiden genannten Druckschriften ist der Messvorgang hinreichend bekannt. Weiterhin sind aus der WO2005/005945A1 und der EP0802401A1 Messgeräte zur Messung von Temperaturen in Schmelzen mit einer um eine Spule gewickelte Lichtleitfaser bekannt.

Bei den verwendeten relativ langen Lichtleitfasern (bis einige 100 Meter) hat sich gezeigt, dass die Faser an ihrem Eintauchende die Strahlung mit einer Vielzahl von sogenannten Moden, auch Schwingungsmoden, aufnimmt. Die verschieden Moden werden in unterschiedlicher Intensität über die große Länge der Faser gedämpft und gegebenenfalls durch gegenseitige Beeinflussung verändert. Der Vorgang der Dämpfung und somit der Signaländerung ist abhängig von der Strecke, die das Lichtsignal die Lichtleitfaser durchläuft. Insgesamt kann dies zu einer Verfälschung beispielsweise eines Temperaturmesssignals bei etwa 1600 °C von deutlich mehr als 10 °C führen bei einer Änderung der Länge der Lichtleitfaser durch Verbrauch von etwa 100 Meter. Um diesen Verfälschungseffekt während mehrerer Messungen so gering wie möglich zu halten, wird häufig eine größere Länge der Lichtleitfaser auf der Kabeltrommel belassen und nicht verbraucht, was jedoch kostspielig ist.

Aus der Telekommunikationsindustrie sind sogenannte Modenfilter bekannt, bei denen durch stellenweise gezielte Durchmesserverringerung einer optischen Faser Moden eliminiert werden. Aus der WO01/69313 sind z.B. Modenfilter bekannt, bei dem die Lichtleitfaser um eine Spindel gewickelt ist.

Dies ist in der Telekommunikation ohne weiteres möglich, da zum einen die Fasern in ihrer Länge relativ konstant sind (sie werden nicht verbraucht) und zum anderen wird das Licht in den sogenannten Kern der Lichtleitfaser eingekoppelt und nicht in den Mantel. Dieser besteht wie der Kern ebenfalls aus Quarzglas. Die Länge der in der Telekommunikation verwendeten Fasern beträgt regelmäßig deutlich mehr als ein Kilometer, Moden im Mantel werden über eine solche Distanz ausgelöscht und wirken sich nicht störend aus.

In der Metallurgie, insbesondere für Messungen, werden deutlich kürzere Lichtleitfasern, meist unter 500 Meter, verwendet, wobei das Licht sowohl in den Kern als auch in dem Mantel der Lichtleitfaser eingekoppelt wird und dadurch sehr unstabil ist. Auf die Stabilität kann sich auch die während des Einsatzes stark schwankende Temperatur, der die Lichtleitfaser ausgesetzt ist, auswirken.

Aufgabe der vorliegenden Erfindung ist es, die vorhandenen Messgeräte zu verbessern und genauere Messungen zu ermöglichen.

Die Aufgabe wird durch die Merkmale der unabhängigen Ansprüche gelöst. Vorteilhafte Ausgestaltungen ergeben sich aus den abhängigen Ansprüchen. Bei dem erfindungsgemäßen Messgerät sind wesentliche Bauteile für die Strahlungsführung auf relativ engem Raum zusammengefasst und die störenden Moden werden ausgefiltert, so dass auch bei größerer Längenänderung der Lichtleitfaser die Messgenauigkeit in Schmelzen verbessert wird. So wird beispielsweise in Schmelzen bei einer Temperatur von etwa 1600° C die Messgenauigkeit und Messkonstanz während des Verbrauchs der Quarzglasfaser auf eine Abweichung unter 10° C erhöht.

Die Lichtleitfaser weist einen Kern und einen Mantel auf, die beide aus Quarzglas gebildet sind, sowie eine das Quarzglas umgebende Hülle, die zumindest im zum Verbrauch vorgesehenen Bereich aus Metall, wie Stahl, gebildet sein kann und die das Quarzglas mechanisch stabilisiert. In einem nicht verbrauchbaren Bereich kann die Hülle auch aus Kunststoff gebildet sein.

Ein Verteiler ist auch unter dem Begriff "Organiser" bekannt. Er dient zum einen dem Ausgleich eventueller Längenabweichungen bei unterschiedlichen Längen der nach Verbrauch ausgetauschten Lichtleitfasern und zum anderen der Verbindung des verbrauchbaren Teils der Lichtleitfaser mit einem weiteren, nicht zum Verbrauch vorgesehenen Abschnitt einer Lichtleitfaser über eine Lichtleitfaserverbindung, auch "Splice" genannt, wobei die nicht zum Verbrauch vorgesehene Lichtleitfaser zur Ankopplung an einen Signalwandler beziehungsweise einer Elektronik vorgesehen sein kann.

Verbinder oder Organiser spezieller Art sind aus der Telekommunikation beispielsweise aus US 5,802,237 A oder, in anderer baulicher Ausgestaltung, aus EP 1 377 862 B1 bekannt. Weitere derartige in der Telekommunikation verwendete Organiser sind in EP 222 662 A1, EP 903 594 A1, WO 2010/015846 A1, WO 2010/001156 A1 oder WO 2008/017622 A1 bekannt. Diese sind jedoch für den stationären Betrieb und für nicht verbrauchbare Lichtleitfasern vorgesehen, währenddessen das erfindungsgemäße Messgerät naturgemäß auf den Verbrauch der verwendeten Lichtleiterfaser ausgerichtet ist. Daher ist es auch vorteilhaft, dass die Kabeltrommel drehbar an einem Träger des Messgerätes, also ganz allgemein einer Halterung, angeordnet ist.

Der Träger kann als Rahmen ausgebildet und/oder mit einem Gehäuse versehen sein, das zur Aufnahme einzelner Bestandteile des Messgerätes dienen kann. Die Kabeltrommel kann innerhalb oder außerhalb des Gehäuses angeordnet sein. An dem Träger kann ein drehbares Rad oder eine drehbare Halterung vorgesehen sein, an der die Kabeltrommel fixiert und darüber mit dem Träger verbunden werden kann. Der Träger kann insbesondere mobil ausgebildet sein, so dass das Messgerät nach Bedarf transportiert werden kann. Hierzu können beispielsweise Räder und ein Handgriff vorgesehen sein, die Kabeltrommel kann in einem Gehäuse angeordnet werden, welches weitere Bedienelemente und/oder Elektronikkomponenten aufweist.

An dem Träger kann ein Halter vorgesehen sein, an dem die für die Messung verwendete Tauchlanze während der Messpausen fixiert werden kann. Vorteilhaft ist es, dass der Träger eine Vorschubeinrichtung für die Lichtleitfaser sowie gegebenenfalls eine Instrumententafel aufweist, die der Bedienung beziehungsweise Steuerung des Faservorschubs und der Messeinrichtung als solcher dienen kann. Hierzu kann eine Anzeige in die Instrumententafel integriert sein.

Die Kabeltrommel ist zweckmäßigerweise lösbar an dem Träger angeordnet, um einen schnellen Austausch, unter anderem nach Verbrauch der Lichtleitfaser, zu gewährleisten. In dem Innenraum der Kabeltrommel kann vorzugsweise ein Detektor und/oder Datenspeicher und/oder Signalumwandlungseinrichtung und/oder eine elektrische Schnittstelle angeordnet sein. Der Detektor sowie die Signalumwandlungseinrichtung dienen der Aufnahme des Lichtsignals und der Umwandlung des empfangenen Lichts in elektrische Signale. Der Datenspeicher dient der Speicherung zum Beispiel des Verbrauchs der Lichtleitfaser und die elektrische Schnittstelle ermöglicht den weiterführenden Anschluss des Messgerätes an Laboreinrichtungen, Computer oder Ähnliches. Der Detektor kann zweckmäßigerweise innerhalb eines Gehäuses der Signalumwandlungseinrichtung, die die Lichtleitfaser mit einer elektrischen Leitung verbindet, angeordnet sein. Durch das gemeinsame Gehäuse sind Abschirmungen gegenüber äußeren Einflüssen möglich, so dass sowohl optische, elektrische oder elektromagnetische als auch mechanische Beeinflussungen vermieden werden können.

Erfindungsgemäß ist in dem Innenraum der Kabeltrommel eine Lichtleitfaserverbindung, ein sogenannter Splice angeordnet. Damit werden Fasern unterschiedlicher Art verbunden, beispielsweise die zur Messung verwendete Lichtleitfaser, die mit einer Metallhülle versehen ist und die sich von einer gegebenenfalls verwendeten Tauchlanze über die mehrfach gewundene Aufwicklung auf dem äußeren Umfang der Kabeltrommel in deren Innenraum erstreckt und die dort mit einer weiteren, beispielsweise nur mit einer Kunststoffhülle versehenen Lichtleitfaser verbunden wird. Diese, vorzugsweise kunststoffummantelte, Lichtleitfaser wird dann beispielsweise in dem Gehäuse einer Signalumwandlungseinrichtung mit dem Detektor verbunden. Vorteilhaft ist es also, dass im Innenraum zwei Lichtleitfasern durch Spleißen miteinander verbunden sind, wobei das Spleißen vorzugsweise eine Schweißverbindung umfasst.

Das Modenfilter umfasst zweckmäßigerweise eine auf einer geschlossenen Kurve, insbesondere auf einer Kreisbahn verlaufende Anordnung eines Abschnitts der Lichtleitfaser. Insbesondere verläuft die Lichtleitfaser zweckmäßigerweise in 1 - 20 Windungen auf der geschlossenen Kurve. Diese geschlossene Kurve weist zweckmäßigerweise einen kleinsten Durchmesser von 1 cm - 6 cm auf. Durch ein solches Modenfilter, der prinzipiell wie eine entsprechend kleine Kabeltrommel ausgebildet sein kann, werden störende Moden, insbesondere im Bereich der Faserhülle der Lichtleitfaser ausgeblendet. Vorteilhaft ist es, dass das Modenfilter an seinem Umfang von dem Verteiler (Organiser) umgeben ist, also innerhalb des Verteilers angeordnet ist. Zweckmäßig ist es weiterhin, dass der Innenraum der Kabeltrommel mechanisch und/oder elektromagnetisch abgedichtet ist.

Zweckmäßig ist es, dass in dem Messgerät, insbesondere im Gehäuse des Trägers, ein Detektor, ein mit dem Detektor verbundenes Ende einer Lichtleitfaser und ein Bandpassfilter miteinander unlösbar verbunden und vorzugsweise gegen Feuchtigkeit und Streulicht abgedichtet sind. Zusätzlich oder auch alternativ kann es sinnvoll sein, dass ein Kern einer mit einem Detektor einerseits und mit der auf der Kabeltrommel aufgewickelte Lichtleitfaser andererseits verbundenen Lichtleitfaser vorzugsweise an seinem mit dem Detektor verbundenen Ende einen genauso großen oder kleineren Durchmesser aufweist wie die auf der Kabeltrommel aufgewickelte Lichtleitfaser. Eine solche Anordnung stellt ebenfalls ein Modenfilter dar.

Des Weiteren kann an dem Messgerät eine Antenne zur drahtlosen Signalübertragung angeordnet sein, um die Flexibilität des Einsatzes des Messgerätes zu erhöhen.

Erfindungsgemäß ist ferner eine Kabeltrommel zur Verwendung in einem erfindungsgemäßen Messgerät.

Nachfolgend wird die Erfindung beispielhaft anhand von Zeichnungen beschrieben. In den Zeichnungen zeigt
- Fig. 1: die schematische Darstellung eines erfindungsgemäßen Messgerätes sowie
- Fig. 2: eine schematische Darstellung der erfindungsgemäßen Kabeltrommel.

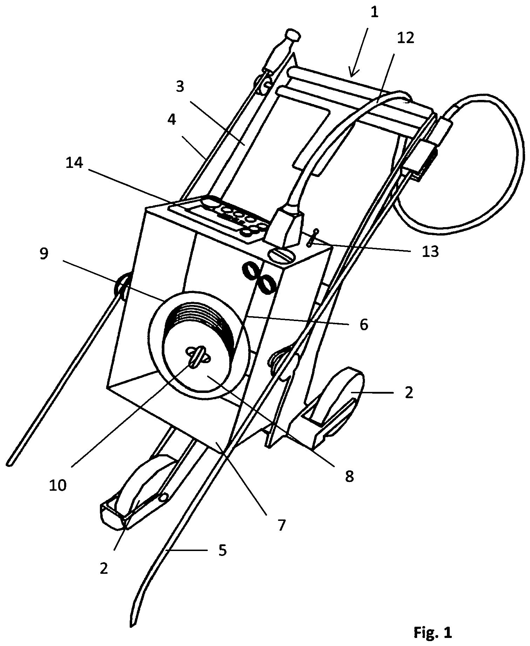

In der Figur 1 ist eine beispielhafte Ausführungsform des erfindungsgemäßen Messgerätes dargestellt. Es weist einen beweglichen Träger 1 auf, der durch Räder 2 fahrbar ausgeführt ist. An einem Rahmen 3 des Trägers 1 kann ein sogenannter Krustenbrecher 4 fixiert sein, mit dem eine auf einer Metallschmelze, beispielsweise auf einer Stahlschmelze aufliegende Schlacke durchbrochen werden kann, damit die ebenfalls an dem Träger 1 gehalterte Tauchlanze 5, durch die sich eine Lichtleitfaser 6 erstreckt, in die Schmelze geführt werden kann. Dort erfolgt die Aufnahme der Strahlung in der Lichtleitfaser 6 für die Messung, aus der Strahlung kann die Temperatur der Schmelze in bekannter Weise ermittelt werden.

Der Träger 1 weist ein allseitig geschlossenes Gehäuse 7 auf, in dem eine Kabeltrommel 8 an einem drehbaren Rad 9 lösbar angeordnet ist. Die Kabeltrommel 8 ist mittels einer Halterung 10 lösbar an dem drehbaren Rad 9 fixiert. Außer der Kabeltrommel 8 ist innerhalb des geschlossenen Gehäuses 7 zumindest noch ein Faservorschub 11 angeordnet, mit dessen Hilfe die Lichtleitfaser 6 von der drehbaren Kabeltrommel 8 durch eine Schutzhülse 12 hindurch in die Tauchlanze 5 ständig oder nach Bedarf nachgeführt werden kann. An der Oberseite des Gehäuses 7 ist neben dem Durchtritt der Schutzhülse 12 eine Antenne 13 zur drahtlosen Weiterleitung von Daten angeordnet. Des Weiteren befindet sich auf der Oberseite des Gehäuses 7 eine Instrumententafel 14 mit einem Display.

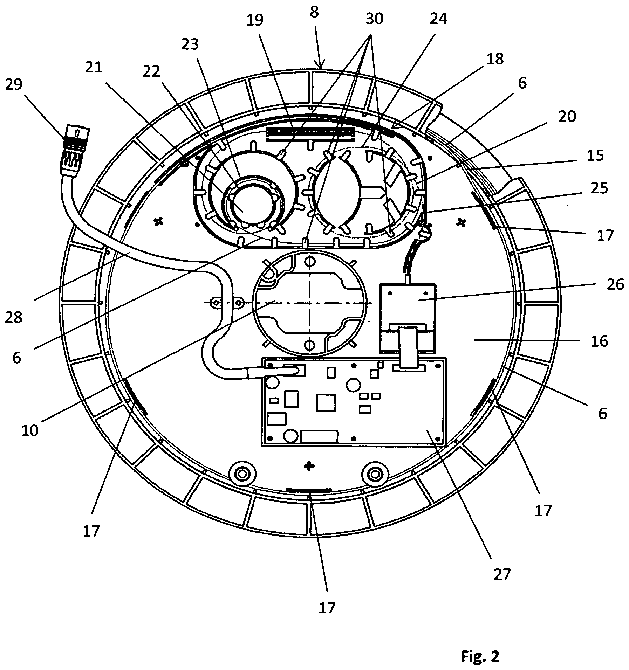

Figur 2 zeigt den Innenraum der Kabeltrommel 8. Im Zentrum ist die Halterung 10 erkennbar, mit der die Kabeltrommel 8 an dem Träger 1 innerhalb des Gehäuses 7 fixiert wird. Um den äußeren Umfang der Kabeltrommel 8 herum ist die Lichtleitfaser 6 aufgewickelt. Die Lichtleitfaser 6 ist gebildet aus Quarzglas, das von einem Stahlrohr ummantelt ist. Innerhalb des Stahlrohres der Lichtleitfaser 6 weist diese einen Kern aus Quarzglas sowie einen Mantel, ebenfalls aus Quarzglas, auf. Durch eine Öffnung 15 in der äußeren Mantelfläche der Kabeltrommel 8 wird ein Ende der Lichtleitfaser 6 in den Innenraum 16 der Kabeltrommel 8 geführt und dort mittels Führungsschienen 17 an der inneren Umfangsfläche der Kabeltrommel 8 geführt bis in den Verteiler 18 hinein. Dort wird die Lichtleitfaser 6 über unterschiedliche in dem Verteiler angeordnete Führungselemente 30 durch das Modenfilter 21 bis in eine sogenannte Lichtleitfaserverbindung 19, einen sogenannten Splice, hineingeführt. Hier wird ein Ende der Lichtleitfaser 6 mit einer weiteren Lichtleitfaser 20 verschweißt.

Das Modenfilter 21 weist eine kreisförmige Spule 22 auf, die von einer Führung 23 weitestgehend umgeben ist, wobei in einem Zwischenraum zwischen der Führung 23 und der Spule 22 die Lichtleitfaser 6 in etwa 5 Windungen um die Spule 22 gewickelt ist. Die dadurch gebildeten Windungen der Lichtleitfaser 6 haben einen Durchmesser von etwa 4 bis 5 cm, so dass störende Moden durch den geringen Durchmesser ausgeblendet werden.

Die Lichtleitfaser 20 weist einen Kern und einen darüber angeordnet Mantel aus Quarzglas auf. Die Lichtleitfaser 20 wird gegebenenfalls innerhalb des Verteilers 18 über verschiedene Führungselemente 30 in einer Schleife dem Ausgang 25 des Verteilers 18 zugeführt und verläuft von dort in einen Detektor 26 hinein. Die beiden Lichtleitfasern 6;20 werden durch die Führungselemente 30 in unterschiedlichen Ebenen geführt, so dass sie sich nicht berühren.

Der Detektor 26 ist gegen elektromagnetische Strahlung und Streulicht abgedichtet. Er ist mit einer Leiterplatte 27 verbunden, die unter anderem eine Speichereinheit enthält, in der Daten über Kabelverbrauch, gemessene Temperaturen und so weiter gespeichert werden können. An der Leiterplatte 27 ist ein Kabel 28 angeordnet, das eine Kupplung 29 zur Weiterleitung von elektrischen Signalen an nachfolgende Geräte, wie beispielsweise Computer, aufweist.

## Patentansprüche

1. Messgerät zur Messung von Parametern in Schmelzen, insbesondere zur Messung der Temperatur, insbesondere in Metall- oder Kryolithschmelzen mit einem Schmelzpunkt oberhalb 500 °C, mit einer Lichtleitfaser (6) zur Aufnahme von Strahlung aus der Schmelze und mit einer Kabeltrommel (8), die einen äußeren Umfang zur Aufnahme der Lichtleitfaser (6) und einen von dem äußeren Umfang umgebenden Innenraum (16) aufweist, **dadurch gekennzeichnet, dass** in dem Innenraum (16) eine Lichtleitfaserverbindung (19), ein Verteiler (18) und ein Modenfilter (21) für die Lichtleitfaser (6) angeordnet sind, wobei ein Ende der Lichtleitfaser (6) durch eine Öffnung (15) in der äußeren Mantelfläche der Kabeltrommel (8) in den Innenraum (16) der Kabeltrommel (8) geführt ist und dort mittels Führungsschienen (17) an der inneren Umfangsfläche der Kabeltrommel (8) in den Verteiler (18) hineingeführt ist, und wobei die Lichtleitfaser (6) über unterschiedliche in dem Verteiler (18) angeordnete Führungselemente durch das Modenfilter (21) bis in die Lichtleitfaserverbindung (19) hineingeführt ist.

2. Messgerät nach Anspruch 1, **dadurch gekennzeichnet, dass** die Kabeltrommel (8) drehbar an einem Träger (1) angeordnet ist.

3. Messgerät nach Anspruch 2, **dadurch gekennzeichnet, dass** der Träger (1) eine Vorschubeinrichtung für die Lichtleitfaser (6) und/oder eine Instrumententafel (14) aufweist.

4. Messgerät nach Anspruch 2 oder 3, **dadurch gekennzeichnet, dass** die Kabeltrommel (8) lösbar an dem Träger (1) angeordnet ist.

5. Messgerät nach mindestens einem der Ansprüche 1 bis 4, **dadurch gekennzeichnet, dass** in dem Innenraum (16) der Kabeltrommel (8) ein Detektor (26) und/oder ein Datenspeicher und/oder eine Signalumwandlungseinrichtung und/oder eine elektrische Schnittstelle angeordnet ist/sind.

6. Messgerät nach Anspruch 5, **dadurch gekennzeichnet, dass** der Detektor (26) innerhalb eines Gehäuses der Signalumwandlungseinrichtung angeordnet ist, die die Lichtleitfaser (6) mit einer elektrischen Leitung verbindet.

7. Messgerät nach Anspruch 1, **dadurch gekennzeichnet, dass** im Innenraum (16) zwei Lichtleitfasern (6) durch Spleißen miteinander verbunden sind, wobei das Spleißen vorzugsweise eine Schweißverbindung ist.

8. Messgerät nach mindestens einem der Ansprüche 1 bis 7, **dadurch gekennzeichnet, dass** das Modenfilter (21) eine auf einer geschlossenen Kurve, insbesondere auf einer Kreisbahn verlaufende Anordnung eines Abschnitts der Lichtleitfaser (6) umfasst.

9. Messgerät nach Anspruch 8, **dadurch gekennzeichnet, dass** die Lichtleitfaser (6) in 1 bis 20 Windungen auf der geschlossenen Kurve verläuft.

10. Messgerät nach Anspruch 8 oder 9, **dadurch gekennzeichnet, dass** der kleinste Durchmesser der Kurve 1 cm bis 6 cm beträgt.

11. Messgerät nach mindestens einem der Ansprüche 8 bis 10, **dadurch gekennzeichnet, dass** das Modenfilter (21) an seinem Umfang von dem Verteiler (18) umgeben ist.

12. Messgerät nach mindestens einem der Ansprüche 1 bis 11, **dadurch gekennzeichnet, dass** der Innenraum (16) der Kabeltrommel (8) mechanisch und/oder elektromagnetisch abgedichtet ist.

13. Messgerät nach mindestens einem der Ansprüche 1 bis 12, **dadurch gekennzeichnet, dass** ein Detektor (26), ein mit dem Detektor (26) verbundenes Ende einer Lichtleitfaser (6) und ein Bandpassfilter miteinander unlösbar verbunden und vorzugsweise gegen Feuchtigkeit und Streulicht abgedichtet sind.

14. Messgerät nach mindestens einem der Ansprüche 1 bis 13, **dadurch gekennzeichnet, dass** ein Kern einer mit einem Detektor (26) einerseits und mit der auf der Kabeltrommel (8) aufgewickelte Lichtleitfaser (6) andererseits verbundenen Lichtleitfaser (6) vorzugsweise an seinem mit dem Detektor (26) verbundenen Ende einen genauso großen oder kleineren Durchmesser aufweist wie die auf der Kabeltrommel (8) aufgewickelte Lichtleitfaser (6).

15. Messgerät nach mindestens einem der Ansprüche 1 bis 14, **dadurch gekennzeichnet, dass** an dem Messgerät eine Antenne (13) zur drahtlosen Signalübertragung angeordnet ist.

16. Kabeltrommel (8) zur Verwendung in einem Messgerät nach mindestens einem der Ansprüche 1 bis 15.

## Claims

1. Measuring device for measuring parameters in melts, in particular for measuring the temperature, in particular in metal or cryolite melts with a melting point above 500°C, with an optical fibre (6) for receiving radiation from the melt and with a cable drum (8) that comprises an external circumference for accommodation of the optical fibre (6) and an internal space (16) that is surrounded by the external circumference, **characterised in that** an optical fibre connection (19), a distributor (18), and a mode filter (21) for the optical fibre (6) are arranged in the internal space (16), whereby one end of the optical fibre (6) is guided through an opening (15) in the external jacket surface of the cable drum (8) into the internal space (16) of the cable drum (8) and, there, is guided into the distributor (18) by means of guide rails (17) on the internal circumferential surface of the cable drum (8), and whereby the optical fibre (6) is guided through the mode filter (21) into the optical fibre connection (19) via various guide elements that are arranged in the distributor (18).

2. Measuring device according to claim 1, **characterised in that** the cable drum (8) is arranged in rotatable manner on a support (1).

3. Measuring device according to claim 2, **characterised in that** the support (1) comprises a feed facility for the optical fibre (6) and/or an instrument panel (14).

4. Measuring device according to claim 2 or 3, **characterised in that** the cable drum (8) is arranged in detachable manner on the support (1).

5. Measuring device according to at least one of the claims 1 to 4, **characterised in that** a detector (26) and/or a data storage and/or a signal conversion facility and/or an electrical interface is/are arranged in the internal space (16) of the cable drum (8).

6. Measuring device according to claim 5, **characterised in that** the detector (26) is arranged inside a housing of the signal conversion facility that connects the optical fibre (6) to an electrical cable.

7. Measuring device according to claim 1, **characterised in that** two optical fibres (6) are connected to each other in the internal space (16) by splicing, whereby the splicing is preferred to be a welded connection.

8. Measuring device according to at least one of the claims 1 to 7, **characterised in that** the mode filter (21) comprises an arrangement of a section of the optical fibre (6) that extends on a closed curve, in particular on a circular path.

9. Measuring device according to claim 8, **characterised in that** the optical fibre (6) extends in 1 to 20 turns on the closed curve.

10. Measuring device according to claim 8 or 9, **characterised in that** the smallest diameter of the curve is 1 cm to 6 cm.

11. Measuring device according to at least one of the claims 8 to 10, **characterised in that** the distributor (18) surrounds the mode filter (21) on its circumference.

12. Measuring device according to at least one of the claims 1 to 11, **characterised in that** the internal space (16) of the cable drum (8) is sealed mechanically and/or electromagnetically.

13. Measuring device according to at least one of the claims 1 to 12, **characterised in that** a detector (26), an end of the optical fibre (6) that is connected to the detector (26), and a bandpass filter are connected to each other in non-detachable manner and preferably are sealed with respect to humidity and scattered light.

14. Measuring device according to at least one of the claims 1 to 13, **characterised in that** a core of an optical fibre (6), which is connected to a detector (26) on one side and to the optical fibre (6) reeled up onto the cable drum (8) on the other side, is preferred to have a diameter, on its end that is connected to the detector (26), that is equal to or smaller than the optical fibre (6) reeled up onto the cable drum (8).

15. Measuring device according to at least one of the claims 1 to 14, **characterised in that** an antenna (13) for wireless signal transmission is arranged on the measuring device.

16. Cable drum (8) for use in a measuring device according to at least one of the claims 1 to 15.

## Revendications

1. Instrument de mesure pour la mesure de paramètres dans des masses fondues, en particulier pour la mesure de la température, en particulier dans des masses fondues de métal ou de cryolithe, avec un point de fusion au-dessus de 500°C, avec une fibre optique (6) pour la réception du rayonnement émis par la masse fondue et avec un enrouleur de câble (8) qui présente une périphérie extérieure pour la réception de la fibre optique (6) et un espace intérieur (16) entouré de la périphérie extérieure, **caractérisé en ce qu'**une connexion de la fibre optique (19), un répartiteur (18) et un filtre de mode (21) pour la fibre optique (6) sont disposés dans l'espace intérieur (16), une extrémité de la fibre optique (6) étant guidée par une ouverture (15) dans la surface d'enveloppe extérieure de l'enrouleur de câble (8) dans l'espace intérieur (16) de l'enrouleur de câble (8) et y étant introduite au moyen de glissières (17) à la surface périphérique intérieure de l'enrouleur de câble (8) dans le répartiteur (18) et la fibre optique (6) étant introduite jusque dans la connexion de la fibre optique (19) par le filtre de mode (21) au-dessus de différents éléments de guidage disposés dans le répartiteur (18).

2. Instrument de mesure conformément à la revendication n°1, **caractérisé en ce que** l'enrouleur de câble (8) est disposé de façon rotative sur un support (1).

3. Instrument de mesure conformément à la revendication n°2, **caractérisé en ce que** le support (1) présente un dispositif d'avance pour la fibre optique (6) et/ou un tableau de bord (14).

4. Instrument de mesure conformément à la revendication n°2 ou n°3, **caractérisé en ce que** l'enrouleur de câble (8) est disposé de façon amovible sur le support (1).

5. Instrument de mesure conformément au moins à l'une des revendications n°1 à n°4, **caractérisé en ce qu'**un détecteur (26) et/ou une mémoire de données et/ou un dispositif de conversion de signal et/ou une interface électrique est/sont disposés dans l'espace intérieur (16) de l'enrouleur de câble (8).

6. Instrument de mesure conformément à la revendication n°5, **caractérisé en ce que** le détecteur (26) est disposé dans un boîtier du dispositif de conversion de signal qui connecte la fibre optique (6) à une ligne électrique.

7. Instrument de mesure conformément à la revendication n°1, **caractérisé en ce que** deux fibres optiques (6) sont interconnectées par épissage dans l'espace intérieur (16), l'épissage étant de préférence un joint soudé.

8. Instrument de mesure conformément au moins à l'une des revendications n°1 à n°7, **caractérisé en ce que** le filtre de mode (21) comprend une disposition d'une section de la fibre optique (6), se déroulant sur une courbe fermée, en particulier sur une trajectoire circulaire.

9. Instrument de mesure conformément à la revendication n°8, **caractérisé en ce que** la fibre optique (6) se déroule dans 1 à 20 spires sur la courbe fermée.

10. Instrument de mesure conformément à la revendication n°8 ou n°9, **caractérisé en ce que** le plus petit diamètre de la courbe est de 1 cm à 6 cm.

11. Instrument de mesure conformément au moins à l'une des revendications n°8 à n°10, **caractérisé en ce que** le filtre de mode (21) est entouré du répartiteur (18) sur sa périphérie.

12. Instrument de mesure conformément au moins à l'une des revendications n°1 à n°11, **caractérisé en ce que** l'espace intérieur (16) de l'enrouleur de câble (8) est étanchéifié mécaniquement et/ou électromagnétiquement.

13. Instrument de mesure conformément au moins à l'une des revendications n°1 à n°12, **caractérisé en ce qu'**un détecteur (26), une extrémité d'une fibre optique (6), connectée au détecteur (26), et un filtre passe-bande sont indissolublement reliés et, de préférence, étanchéifiés contre l'humidité et la lumière diffuse.

14. Instrument de mesure conformément au moins à l'une des revendications n°1 à n°13, **caractérisé en ce qu'**un noyau d'une fibre optique (6) connectée, d'une part, à un détecteur (26) et à la fibre optique (6) enroulée sur l'enrouleur de câble (8), d'autre part, présente de préférence, à son extrémité connectée au détecteur (26), un diamètre aussi grand ou aussi petit que la fibre optique (6) enroulée sur l'enrouleur de câble (8).

15. Instrument de mesure conformément au moins à l'une des revendications n°1 à n°14, **caractérisé en ce qu'**une antenne (13) pour la transmission de signal sans fil est disposée sur l'instrument de mesure.

16. Enrouleur de câble (8) destiné à être utilisé dans un instrument de mesure conformément au moins à l'une des revendications n°1 à n°15.
